Europäisches Patentamt

European Patent Office

Office européen des brevets

(11) Publication number: **0 272 021 B1**

## EUROPEAN PATENT SPECIFICATION

(45) Date of publication of patent specification: **21.10.92**

(51) Int. Cl.⁵: **C08F 2/08**, C09D 133/06, C08F 220/12

(21) Application number: **87310665.2**

(22) Date of filing: **03.12.87**

(54) **Non-aqueous polymeric dispersion compositions and processes for making them.**

(30) Priority: **15.12.86 US 941916**

(43) Date of publication of application:
**22.06.88 Bulletin 88/25**

(45) Publication of the grant of the patent:
**21.10.92 Bulletin 92/43**

(84) Designated Contracting States:
**AT BE CH DE ES FR GB IT LI LU NL SE**

(56) References cited:
EP-A- 0 008 156     EP-A- 0 052 233
EP-A- 0 065 279     EP-A- 0 120 563
GB-A- 2 082 601     GB-A- 2 161 170
US-A- 3 607 821

(73) Proprietor: **ROHM AND HAAS COMPANY
Independence Mall West
Philadelphia Pennsylvania 19105(US)**

(72) Inventor: **Walker, Frederick Herbert
1375 Downing Drive
Hatfield Pennsylvania 19440(US)**

(74) Representative: **Angell, David Whilton et al
ROHM AND HAAS (UK) LTD. European Operations Patent Department Lennig House 2
Mason's Avenue
Croydon CR9 3NB(GB)**

**Description**

This invention is concerned with non-aqueous polymeric dispersion compositions and processes for making them.

Non-aqueous polymer dispersions (NAD) are well known in the art and have found utility in a variety of applications such as coatings and adhesives. These NAD's are typically prepared from ethyl acrylate and methyl methacrylate in organic solvents such as the lower boiling aliphatic hydrocarbons (for example, pentanes, hexanes, and heptanes) and commercial hydrocarbon mixtures such as mineral spirits, petroleum ether, or the like. The preparation of non-aqueous dispersions in general is discussed in Barrett; Dispersion Polymerization in Organic Media, John Wiley & Sons (1975).

US-A-3,514,500 describes polymer dispersions and polymeric substances for use as stabilizers therein. US-A-3,607,821 also discloses a process of preparing dispersions of synthetic polymer particles in an inert organic solvent. GB-A-1,268,692 teaches a process of post-modifying a non-aqueous polymer dispersion by increasing the polar interaction between the disperse polymer and stabilizer.

The durability and particle size are important parameters of non-aqueous dispersions and coatings made therefrom. The durability of coatings made from NAD's of a given glass transition temperature will be greater in compositions based on methyl methacrylate (MMA) and non-polar monomers, such as butyl acrylate (BA), than in compositions based on methyl methacrylate and more polar monomers like ethyl acrylate (EA). However, a major disadvantage of using non-polar monomers such as butyl acrylate and 2-ethylhexyl acrylate (2-EHA) in non-aqueous dispersions is that a very large increase in particle size results. When the particle size of a dispersion gets too large (i.e. greater than about 450 nanometers), various problems are encountered which make these dispersions unsuitable in many practical applications. For example, non-aqueous dispersions having an average particle size greater than about 450 nanometers are unstable as dispersions because the polymer particles settle very rapidly. Also the gloss of pigmented coatings decreases when the particle size gets too large.

One approach to combat the increase in particle size in NAD's containing nonpolar monomers has been to significantly increase the level of dispersant. However, this is generally not satisfactory because the increased dispersant level only decreases particle size to a certain level, which is still typically too large to be of practical use. Additionally, the dispersant is perhaps the most expensive component in the NAD composition, and increasing the amount of dispersant can significantly add to the cost of preparing the composition.

Another technique to decrease particle size has been to add relatively high levels of very polar monomers such as $\alpha,\beta$-unsaturated acids to offset the effects of the non-polar monomers. The disadvantage with using high levels of extremely polar monomers is that they increase the water sensitivity of the coating. This gives detrimental properties to the final NAD coatings, such as poor humidity resistance, early washout, and high water pick-up.

EP-A-0120563 discloses a process for the preparation of nonaqueous dispersions of crosslinked polymer particles. Each of the Examples of EP-A-0120563 discloses a process for preparing the particles by polymerizing a monomer mix in an aromatic solvent medium, such as xylene, naphtha and methyl amyl ketone.

A need exists for non-aqueous dispersions which have high durability, low water sensitivity and a relatively small particle size for good dispersion stability. Applicant has surprisingly discovered that novel NAP's having high durability, weatherability and small particle size can be achieved by carrying out the dispersion polymerization of specific comonomers in a straight-chain, $C_{10}$ to $C_{18}$ hydrocarbon medium and in the presence of an amphipathic dispersant.

According to the present invention there is therefore provided a process for preparing a copolymer comprising polymerizing a monomer mixture consisting of a) at least 40 weight percent $C_1$-$C_3$ alkyl methacrylate monomer(s); b) at least 10 weight percent of comonomer(s) of butyl acrylate, isobutyl acrylate, butyl methacrylate, isobutyl methacrylate, or 2-ethylhexyl acrylate; and c) 0 or up to 50 weight percent of other free-radical-polymerizable monomer(s), in the presence of an amphipathic dispersant or dispersant precursor and a solvent medium comprising a hydrocarbon; characterised in that the hydrocarbon is a $C_{10-18}$ straight-chain hydrocarbon; and wherein the copolymer has a glass transition temperature of 0 to 70°C as calculated by the Fox equation and an average particle size of no more than 450 nanometres.

The use of $C_{10}$ to $C_{18}$, straight-chain hydrocarbon as the dispersion polymerization medium to obtain small-particle-size dispersions is novel. The prior art teaches away from the use of straight-chain hydrocarbons as the solvent medium to obtain small-particle-size dispersions. For example, Barrett, supra, pages 119-137, discusses the solubility parameter as being useful in relating solubility to the chemical structure of polymer and solvent. Barrett teaches on pages 134-135 that, by increasing the solvency of the medium for

2

the polymer which is being produced, fewer particles are produced and they are correspondingly larger and usually of wider particle size distribution. Thus, Barrett teaches that an increase in the solubility parameter of the solvent medium leads to an increase in particle size of the polymer. Based on this relationship, one skilled in the art would expect straight-chained hydrocarbon solvents (which have relatively higher solubility parameters) to increase the particle size of NAD's compared to similar branched hydrocarbon solvents. On the contrary, applicant unexpectedly discovered that the straight-chain hydrocarbons result in a dramatically smaller particle size in comparison to the branched hydrocarbons.

This invention also relates to novel, improved non-aqueous polymer dispersions and coatings made therefrom having high durability, weatherability and relatively small particle size. The novel non-aqueous dispersions are prepared by the process according to the present invention, namely polymerizing a monomer mixture containing a) at least 40 weight percent $C_1$-$C_3$ alkyl methacrylate monomer(s); at least 10 weight percent of comonomer(s) selected from butyl acrylate, isobutyl acrylate, butyl methacrylate, isobutyl methacrylate, and 2-ethylhexyl acrylate; and c) 0 to 50 weight percent of other free-radical-polymerizable monomer(s) in the presence of an amphiphatic dispersant or dispersant precursor and a solvent medium comprising a $C_{10-18}$ straight-chain hydrocarbon. The polymerization is therefore carried out in the presence of an amphipathic dispersant and a solvent medium preferably containing 60% or more by weight of a straight-chain hydrocarbon having an average chain length of 10 to 18 carbons. The polymer particles produced hereby have a glass transition temperature of 0 to 70°C as calculated by the Fox equation and an average particle size by volume less than 450 nanometres. The dispersions are useful in a variety of coatings and adhesives applications.

The present invention therefore provides novel, improved non-aqueous polymer dispersions and a process for preparing these dispersions. The non-aqueous dispersions of this invention are prepared by polymerizing a monomer mixture containing a) at least 40 weight percent $C_1$ to $C_3$ alkyl methacrylate monomer(s); b) at least 10 weight percent of comonomer(s) selected from the group consisting of butyl acrylate, isobutyl acrylate, butyl methacrylate, isobutyl methacrylate, and 2-ethylhexyl acrylate; and c) 0 to 50 weight percent of other free-radical-polymerizable monomer(s), wherein the dispersed polymer preferably has a glass transition temperature from 0°C to 70°C as calculated by the Fox equation and an average particle size by volume less than 450 nanometers. The polymerization is carried out in the presence of an amphipathic dispersant and a solvent medium preferably containing 60% or more by weight of a straight-chain hydrocarbon having an average chain length of 10 to 18 carbon atoms.

The $C_1$-$C_3$ alkyl methacrylate monomers suitable for this invention are preferably one or more of methyl methacrylate, ethyl methacrylate and propyl methacrylate. Preferably, the $C_1$-$C_3$ alkyl methacrylate is present at a level of at least 60 weight percent of the monomer mixture. Methyl methacrylate is the most preferred $C_1$-$C_3$ alkyl methacrylate monomer for use in this invention.

Suitable comonomers are one or more of butyl- and isobutyl-acrylate, butyl and isobutyl-methacrylate, and 2-ethylhexyl acrylate. The comonomers are critical for imparting high durability and weatherability to the non-aqueous dispersions of this invention. The amount of comonomer used is preferably at least 15 weight percent, more preferably 25 weight percent, and preferably no more than 43 weight percent, more preferably 37 weight percent, of the monomer mixture. The most preferred comonomer is butyl acrylate.

The monomer mixture used in preparing the NAD's of this invention may contain from 0 to 50 weight percent of other free-radical-polymerizable monomers. These monomers can be any of the monomers known in the art and having ethylenic unsaturation such as, for example, ethyl acrylate, styrene, 2-hydroxy ethyl acrylate, acrylonitrile, acrylamide, polymer acid, methpolymer acid, itaconic acid and vinyl toluene. A more complete description of these monomers may be found in US-A-3,037,963,

Within the concentration ranges described above, the specific concentration of monomers in the monomer mixture can be determined such that the final copolymer has a glass transition temperature (Tg) as calculated by the Fox equation from 0 to 70°C depending on the desired application. More preferably, the copolymer has a calculated Tg from 15 to 50°C. The Tg of the final copolymer is calculated using the Fox equation:

$$i/Tg(copolymer) = W_{(a)}/Tg_{(a)} + W_{(b)}Tg_{(b)} + ...$$

where $W_{(a)}$ and $W_{(b)}$ are the weight fractions of components (a) and (b) and $Tg_{(a)}$/and... are the glass transition temperatures for homopolymers (a) and (b), respectively. Glass transition temperatures for various homopolymers are available in many literature sources, including J. Bandrup and E.H. Immergut, Polymer Handbook, 2nd ed., John Wiley & Sons, New York, pp 139-192 (1975).

In the more preferred embodiments of this invention the monomer mixture consists essentially of methyl methacrylate, butyl acrylate and ethyl acrylate; most preferably methyl methacrylate and butyl

EP 0 272 021 B1

acrylate. Small amounts (for example less than 12 weight percent total) of additional monomers, as described above under component c), can be included for the purpose of special property enhancement.

Preferably the polymerization process of this invention is carried out in the presence of a solvent medium containing 60% or more by weight of a straight-chain hydrocarbon having an average chain length of 10 to 18 carbon atoms. Preferably the straight-chain hydrocarbon has an average chain length from 10 to 15 carbon atoms, and most preferably 10 to 12 carbon atoms. The most preferred straight-chain hydrocarbons are selected from decane, undecane, dodecane, tridecane, tetradecan, pentadecane, hexadecane, heptadecane, and octadecane. The solvent medium may consist of a straight-chain hydrocarbon as described above or a mixture of two or more of such hydrocarbons. The solvent medium may also contain up to 40% by weight of common organic solvents known in the art and used in non-aqueous dispersions, such as hexanes and the like.

Another feature of this invention is the use of an effective amount of an amphipathic dispersant in carrying out the polymerization of the dispersed polymer. Amphipathic dispersants are those having a combination of non-polar and polar groups, such as are conventionally employed in non-aqueous dispersion polymerization procedures and described in Barrett, Dispersion Polymerization in Organic Media, John Wiley & Sons (1975). Suitable amphipathic dispersants and levels thereof are further described in GB-A-941,305; GB-A-1,052,241; GB-A-1,122,397; GB-A-1,231,614; GB-A-1,269,964; US-A-3,514,500; US-A-4,115,472 and US-A-4,206,099, The amphipathic dispersant is preferably comprised of soluble, nonpolar chains attached to an insoluble, polar backbone. Most preferably the amphipathic dispersant is a derivative of poly (12-hydroxystearic acid).

The term "amphipathic dispersant" includes the preformed dispersants described above as well as precursors which will form the dispersant in situ during polymerization. For example, poly-(12-hydroxystearic acid) can be treated with glycidyl methacrylate to form a polymerizable precursor. This precursor may be added to a non-aqueous dispersion polymerization mixture directly. As will be obvious to someone skilled in the art, this procedure results in the preparation of the dispersant during the course of the NAD polymerization.

The dispersion polymerization process of this invention is carried out following basic techniques which are well known and extensively described in the literature. Reference may be made, for example, to US-A-3,514,500 and US-A-3,666,710 for typical process and reaction conditions.

Applicant's invention yields non-aqueous dispersion compositions which have high durability and weatherability when compared to typical NAD's known in the art. Additionally, the dispersed polymer from applicant's process has an average particle size by volume no more than 450 nanometers as measured using a Nanosizer (Counter Electronics Ltd.), which gives applicant's NAD's excellent dispersion and storage stability. More preferably, the dispersed polymer has an average particle size by volume no more than 400 nanometer; most preferably less than 350 nanometers. These NAD's are useful in many adhesives and coatings applications.

The following Examples further illustrates this invention. All parts and percentages given in the Examples are by weight unless otherwise indicated.

EXAMPLE I - Preparation of Amphipathic Dispersant

An amphipathic dispersant was prepared in a 3-step process for use in the following Examples consisting of 50 parts p(12-hydroxystearic acid)/glycidyl methacrylate, 49 parts methyl methacrylate, and I part methacrylic acid.

In step 1, 200 grams of xylene were added to a 5 litre 4 NRB flask equipped with mechanical stirrer, Dean-Stark trap, condenser and thermometer and maintained under a positive pressure of nitrogen. The flask was warmed to 90°C while stirring. 200 grams of 12-hydroxystearic acid (12-HSA) were added slowly over approximately 30 minutes while maintaining a temperature between 85-90°C. Next, 1.0 grams of 98% methane sulfonic acid (MSA) was added and the reactants heated to 190-195°C. After maintaining the reactants at 190-195°C for about 6 hours, approximately 85ml of water were recovered. Then 0.375 grams of MSA were added and the reaction continued until titration with 0.5N KOH in methanol gave a value of 0.65-0.75 meg. acid/gram.

In step 2, 1900 grams of the poly(12-HSA) prepared in step 1, 253.3 grams of glycidyl methacrylate (GMA), 1.90 grams of hydroquinone, 5.43 grams of dimethyllauryl amine, and 1,470.6 grams of xylene were added to a 5-litre 4 NRB flask equipped with a mechanical stirrer, thermometer, condenser and sub-surface air sprage. The reactants were heated to 145°C and acid consumption was monitored every 2 hours by titration with 0.5N KOH in methanol. After 6 hours the titration showed less than 0.009 meg/gram of acid. The reactants were then cooled to room temperature.

4

In step 3, 467.3 grams of ethyl acetate and 233.3 grams of butyl acetate were added to 5-litre 4 NRB flask as described in step 2. The flask was sparged with nitrogen for about 5 minutes while stirring and then maintained under positive pressure with nitrogen. The reactancts were then warmed to 83-85°C. A monomer feed consisting of 1300 grams of poly(12-HSA)/GMA prepared in step 2, 686 grams of methyl methacrylate (MMA) , and 14 grams of methacrylic acid (MAA) was added at a rate of 800 ml/hour. At the same time an initiator co-feed consisting of 28 grams of azo initiator (Vazo-67 available from DuPont Co.), 30 grams ethyl acetate, and 15 grams of butyl acetate were added at a rate of 24 ml/hour. The total addition of the feeds took 3 hours, during which time the temperature gradually rose to 103-105°C. After maintaining the reactants at 103-105°C for an additional 2 hours, the heat was removed and 1221 grams of naphthol spirits (aliphatic hydrocarbon mixture available from Union Oil Co.) were added while stirring.

EXAMPLE II - Preparation of NAD Using $C_{12}$ Straight Chain Hydrocarbon

To a 2-litre 4NRB flask fitted with a solvent recycle condenser, mechanical stirrer, thermometer, and adapter for the introduction of initiator is added Flask Charge A consisting of 21.4 grams MMA, 0.3 grams MAA, 1.11 grams t-butyl peroctoate, 10.0 grams of poly(12-HSA-GMA/MMA/MAA) dispersant from Ex. 1, 150.1 grams hexane and 244.9 grams of straight-chain hydrocarbon solvent having an average chain length of 12 carbons (Norpar-12 available from Exxon Chenical Co.). The flask was sparged with nitrogen for 10 minutes and then maintained under positive pressure with nitrogen. The reactants were heated to reflux at a temperature of 95-98°C. After initial whitening of the reactants, the reflux temperature was maintained for 20 minutes and Monomer Feed No. 1 [consisting of 75.4 g. BA, 160.3 g MMA, 3.6 g MAA, and 66 g. of p-(12-HSA-GMA/MMA/MAA) dispersant from Ex. 1] was added through the recycle condenser at 100 ml/hour. At the same time Initiator Co-feed (consisting of 1.11 g. t-butyl peroctoate, 3.8 g. hexane and 6.2 g. of $C_{12}$ straight-chain hydrocarbon solvent) was added at a rate of 4 ml/hour. After 30 minutes, the feed rate for Monomer Feed No. 1 was increased to 200 ml/hour. After addition of Monomer Feed No. 1 was complete, Monomer Feed No. 2 (consisting of 75.4 g. BA, 160.3 g. MMA and 3.6 g. MAA) was added. Subsequently a Final Charge B (consisting of 4.44 g. t-butyl peroctoate, 3.04 g. hexane and 4.96 g. $C_{12}$ straight-chain hydrocarbon solvent) was added over 30 minutes. The reflux temperature was maintained for an additional 30 minutes and the reactants were then cooled to room temperature while stirring. The final composition was a non-aqueous dispersion within the scope of this invention and having physical properties as given in Table III.

EXAMPLES III-VI - Preparation of Various NAD's Using Straight-Chain Hydrocarbon Solvents

Following the procedures from Example II, various NAD's were prepared according to this invention having the compositions given below. In each Example, the monomers present in Flask Charge A were the same as in Example II. The appropriate monomers and solvents were used in the Flask Charge A, Monomer Feed No. 1, Monomer Feed No. 2, Initiator Co-feed and Final Charge B to yield final NAD compositions as shown in Table I. Physical properties are given in Table III.

## TABLE

| EXAMPLE | COMPOSITION (parts by weight) | | | | | |
|---|---|---|---|---|---|---|
| | | | | | $\alpha,\beta$-unsatu- | |
| | 2-EHA | BA | EA | MMA | rated acid | Solvent* |
| III | -- | 37.0 | -- | 61.5 | 1.5 | $C_{12}$hydrocarbon |
| IV | -- | 15.0 | 24.0 | 59.5 | 1.5 | $C_{12}$hydrocarbon |
| V | -- | 29.3 | -- | 66.7 | 4.0 | $C_{10}$hydrocarbon |
| VI | 10.5 | -- | 24.0 | 64.0 | 1.5 | $C_{12}$hydrocarbon |

* The solvent medium consisted of 62% of the listed straight-chain hydrocarbon and 38% hexane.

### EXAMPLES VII - XIV - Comparative

Following the procedures from Example II, various NAD's were prepared using solvents falling outside the scope of this invention. In each example the monomers present in Flask Charge A were the same as in Example II. The appropriate monomers and solvents were used in the Flask Charge A, Monomer Feed No. 1, Monomer Feed No. 2, Initiator Co-feed, and final Charge B to yield final NAD compositions as shown in Table II. Physical properties are given in Table III.

6

## TABLE II

| EXAMPLE | | | | | COMPOSITION (parts by weight) | |
|---|---|---|---|---|---|---|
| | | | | | $\alpha,\beta$-unsatu- | |
| | 2-EHA | BA | EA | MMA | rated acid | Solvent* |
| VII | -- | -- | 46.0 | 52.5 | 1.5 | Naphthol Spirits[1] |
| VIII | -- | -- | 37.5 | 61.0 | 1.5 | Naphthol Spirits |
| IX | -- | 32.0 | -- | 66.5 | 1.5 | Naphthol Spirits |
| X | -- | 31.5 | -- | 67.0 | 1.5 | Isopar-H[2] |
| XI | -- | 15.0 | 24.0 | 59.5 | 1.5 | Naphthol Spirits |
| XII | -- | 29.3 | -- | 66.7 | 4.0 | Isopar-H |
| XIII | -- | 29.3 | -- | 66.7 | 4.0 | Naphthol Spirits |
| XIV | 10.5 | -- | 24.0 | 64.0 | 1.5 | Naphthol Spirits |

* The solvent consisted of 62% of the listed solvent and 38% hexane. [1] Naphthol Spirits is an aliphatic hydrocarbon mixture available from Union Oil Co. [2] Isopar-H is a highly-branched, paraffinic hydrocarbon solvent from Exxon Chemical Co.

## TABLE III

Volume Average

| Example | Particle Size (nanometers) | Calculated Tg(°C)* |
|---|---|---|
| II | 308 | 35 |
| III | 418 | 25 |
| IV | 266 | 35 |
| V | 305 | 35 |
| VI | 284 | 35 |
| VII | 274 | 35 |
| VIII | 275 | 45 |
| IX | 1038 | 35 |
| X | 680 | 35 |
| XI | 584 | 35 |
| XII | 510 | 35 |
| XIII | 996 | 35 |
| XIV | 566 | 35 |

*Calculated by the Fox equation

EXAMPLE XVI - Durability Testing

Selected NAD's prepared in the preceding Examples were formulated into paints and evaluated for durability. The paints were formulated using the following recipe:

| Ingredients | Amount (grams) |
|---|---|

Grind:

    long-oil alkyd resin (Cargill 5070 from

      Cargill Co) .................................1.67

    Naphthol Spirits           2.38

    Pigment Dispersing Agent (Nuosperse 657 from

      Tenneco Co) ................................0.31

    Titanium Dioxide (Tipure R-900 from)

      Dupont Co) ................................15.63

Letdown:

    Non-aqueous dispersion .........................35.4

    Butyl Carbitol from Union Carbide Co.......... 7.1

    Naphthol Spirits ............................ 7.1

The grind was prepared in a Cowles mixer at 3000 rpm for 30 minutes. Final paints were letdown with a mechanical stirrer after first pre-mixing the butyl carbitol and naphthol spirits. Paint films were drawn on Bonderite - 1000 (hooker Chem. Corp.) panels to a film thickness of about 0.0387 mm (1.5 mil) and air dried at ambient temperature for two weeks. The panels were then placed in a Q-U-V Accelerated Weathering Tester (Q-Panel Co.), and 20° gloss was measured on a Hunter Lab D48D Glossmeter. The results are given in Table IV.

## TABLE IV

| Non-aqueous Dispersion | 20° Gloss | | |
|---|---|---|---|
| Initial | 500 hours | 1000 hours | |
| Ex. III (63% solids) | 55 | 50 | 43 |
| Ex. IV (63.5% solids) | 55 | 38 | 24 |
| Ex. VII (63.4% solids) | 54 | 15 | 0 |
| Ex. VIII (65.1% solids) | 56 | 31 | 19 |

The results in Table III demonstrate that NAD's prepared according to this invention (Ex. II - VI) have relatively small average particle sizes when compared to corresponding NAD's (Ex. IX - XIV) prepared in solvents other than the $C_8$-$C_{18}$ straight-chain hydrocarbons. The small particle size of the NAD's of this invention gives them excellent dispersion and storage stability. Although Examples VII and VIII had suitable particle sizes they lacked the enchanced durability and weatherability of the butyl acrylate-containing NAD's of this invention as shown in Table IV.

Cargil, Nuosperse, Tipure, Carbitol and Bonderite are trade marks of the aforementioned, respective companies.

**Claims**

1. A process for preparing a copolymer comprising polymerizing a monomer mixture consisting of a) at least 40 weight percent $C_1$-$C_3$ alkyl methacrylate monomer(s); b) at least 10 weight percent of comonomer(s) of butyl acrylate, isobutyl acrylate, butyl methacrylate, isobutyl methacrylate, or 2-ethylhexyl acrylate; and c) 0 or up to 50 weight percent of other free-radical-polymerizable monomer(s), in the presence of an amphipathic dispersant or dispersant precursor and a solvent medium comprising a hydrocarbon; characterised in that the hydrocarbon is a $C_{10-18}$ straight-chain hydrocarbon; and wherein the copolymer has a glass transition temperature of 0 to 70°C as calculated by the Fox equation and an average particle size of no more than 450 nanometers.

2. A process according to claim 1, wherein component a) is present in the monomer mixture in an amount of at least 60 weight percent.

3. A process according to claim 1 or claim 2, wherein component b) is present in said monomer mixture in an amount of from 15 to 43 weight percent.

4. A process according to any one of the preceding claims wherein the solvent medium contains 60% or more by weight of the straight-chain hydrocarbon.

5. Use of a copolymer prepared by a process according to any one of claims 1 to 4 in or as a coating composition.

**Patentansprüche**

1. Verfahren zur Herstellung eines Copolymers, bei dem ein Monomergemisch aus (a) mindestens 40 Gew.-% eines oder mehrerer $C_1$-$C_3$ Alkylmethacrylat-Monomere, (b) mindestens 10 Gew.-% eines oder mehrerer Comonomere von Butylacrylat, Isobutylacrylat, Butylmethacrylat, Isobutylmethacrylat oder 2-Ethylhexylacrylat, und (c) 0 oder bis zu 50 Gew.-% eines oder mehrerer weiterer frei radikal-polymerisierbarer Monomere in Gegenwart eines amphipatischen Dispersionsmittels oder Dispersionsmittelvorläufers und eines einen Kohlenwasserstoff enthaltenden Lösungsmittelmediums polymerisiert wird, dadurch gekennzeichnet, daß der Kohlenwasserstoff ein geradkettiger $C_{10}$-$C_{18}$ Kohlenwasserstoff ist, und das Copolymer eine durch die Fox-Gleichung abgeschätzte Glasumwandlungstemperatur von 0 bis 70°C aufweist und eine durchschnittliche Partikelgröße von nicht mehr als 450 nm hat.

2. Verfahren nach Anspruch 1, worin die Komponente (a) in dem Monomergemisch in einer Menge von mindestens 60 Gew.-% vorliegt.

3. Verfahren nach Anspruch 1 oder 2, worin die Komponente (b) in dem Monomergemisch in einer Menge von 15 bis 43 Gew.-% vorliegt.

4. Verfahren nach einem der vorhergehenden Ansprüche, worin das Lösungsmittelmedium 60 Gew.-% oder mehr des geradkettigen Kohlenwasserstoffs enthält.

5. Verwendung eines nach einem der Verfahren nach einem der Ansprüche 1-4 hergestellten Copolymers in einem oder als Beschichtungsmittel.

**Revendications**

1. Un procédé pour préparer un copolymère comprenant la polymérisation d'un mélange monomère consistant en a) au moins 40% en poids de monomère(s) de méthacrylate d'alcoyle en $C_1$-$C_3$; b) au moins 10% en poids de comonomère(s) d'acrylate de butyle, d'acrylate d'isobutyle, de méthacrylate de butyle, de méthacrylate d'isobutyle ou d'acrylate de 2-éthylhexyle; et c) de 0 jusqu'à 50% en poids d'autre(s) monomère(s) polymérisable(s) par radicaux libres, en présence d'un dispersant ou d'un précurseur de dispersant amphipathique et un milieu solvant comprenant un hydrocarbure; caractérisé en ce que l'hydrocarbure est un hydrocarbure à chaîne droite en $C_{10}$-$C_{18}$; et en ce que le copolymère présente une température de transition vitreuse de 0 à 70°C telle que calculée par l'équation de Fox et une dimension moyenne de particules ne dépassant pas 450 nanomètres.

2. Un procédé selon la revendication 1, dans lequel le composant a) est présent dans le mélange monomère en une quantité d'au moins 60% en poids.

3. Un procédé selon la revendication 1 ou la revendication 2, dans lequel le composant b) est présent dans ledit mélange monomère en une quantité de 15 à 43% en poids.

4. Un procédé selon l'une quelconque des revendications précédentes, dans lequel le milieu solvant contient 60% ou davantage en poids de l'hydrocarbure à chaîne droite.

5. Utilisation d'un copolymère préparé par un procédé selon l'une quelconque des revendications 1 à 4 dans une composition de revêtement ou en tant que composition de revêtement.